# FASCICULE DE BREVET EUROPEEN

(11) **EP 3 692 291 B1**
(45) Date de publication et mention de la délivrance du brevet: **03.11.2021**
(21) Numéro de dépôt: 18785693.5
(22) Date de dépôt: 02.08.2018
(51) Int. Cl.: F16K 35/02, F16K 31/60, F17C 13/04, F16K 1/30, F16K 35/14, F16K 1/44, F16K 31/524

(54) **ROBINET ET RÉSERVOIR(S) DE FLUIDE SOUS PRESSION**
VENTIL UND RESERVOIR(E) FÜR UNTER DRUCK STEHENDE FLÜSSIGKEIT
VALVE AND RESERVOIR(S) FOR PRESSURIZED FLUID

(30) Priorité: 05.10.2017 FR 1701024; 05.10.2017 FR 1701025
(43) Date de publication de la demande: 12.08.2020
(73) Titulaire: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventeur: VIGNEROL, Samuel, 78330 Fontenay Le Fleury (FR); FRENAL, Antoine, 95460 Ezanville (FR); MULLER, Denis, 92500 Rueil Malmaison (FR); PAOLI, Hervé, 92500 Rueil-malmaison (FR); LAMIABLE, Morgan, 57940 Metzervisse (FR); BROECHLER, Johan, 54190 Villerupt (FR); DI FILIPPO, Claudio, 57645 Noisseville (FR)
(74) Mandataire: Air Liquide
(86) Numéro de dépôt international: PCT/FR2018/052000
(87) Numéro de publication internationale: WO 2019/068972

(56) Documents cités:
- WO-A1-2016/146743
- FR-A1- 2 974 402
- GB-A- 441 279
- US-A- 3 737 140
- US-A1- 2016 153 617

## Description

L'invention concerne un robinet et un réservoir ou ensemble de réservoirs de fluide sous pression.

L'invention concerne plus particulièrement un robinet pour fluide sous pression comprenant un corps abritant un circuit de fluide ayant une extrémité amont destinée à être mise en relation avec une réserve de fluide sous pression et extrémité aval destinée à être mise en relation avec un utilisateur de fluide, le circuit comprenant un ensemble de clapet(s) comprenant au moins un clapet d'obturation permettant de fermer ou d'ouvrir le circuit, le robinet comprenant un mécanisme de commande manuelle de l'ensemble de clapet(s), le mécanisme de commande étant monté mobile sur le corps entre une position de repos dans laquelle l'ensemble de clapet(s) est dans une position de fermeture du circuit et une position active dans laquelle le mécanisme de commande actionne l'ensemble de clapet(s) dans une position d'ouverture du circuit selon une première section d'ouverture, le mécanisme de commande comportant une position d'ouverture intermédiaire dans laquelle il actionne l'ensemble de clapet(s) dans une position d'ouverture intermédiaire prédéterminée du circuit selon une seconde section d'ouverture déterminée inférieure à la première section d'ouverture.

Les bonnes pratiques d'usage des bouteilles de gaz sous pression munies d'un robinet recommandent de réaliser un balayage du raccord de sortie du robinet avec le gaz de la bouteille avant d'y brancher tout équipement. Ce bref balayage est généralement réalisé en ouvrant brièvement le clapet d'isolement du robinet via une manœuvre de l'organe manuel de commande (volant, levier ou autre).

Cette purge permet aussi à l'utilisateur de faire facilement et de manière contrôlée des cycles de rinçage des équipements en aval du robinet. Usuellement, les cycles de rinçage sont des cycles de mise en pression (5 à 10bar) et de purge à (1-2 bar relatif) pour retirer les impuretés de l'air (N2/O2/H20/...).

Cette pratique n'est cependant pas possible ou est dangereuse pour les robinets dont l'organe manuel de commande provoque une ouverture trop brutale (levier notamment et en cas de pression élevée). cf. par exemple FR2793297A1.

Si la bouteille n'est pas attachée ou fermement maintenue elle peut basculer et tomber. De plus, le bruit du gaz à haute pression relâché (très haute fréquence) peut causer des pertes d'audition.

Cette ouverture brutale du circuit peut provoquer également des dommages sur les équipements (détenteurs) raccordés en aval. Dans les cas où le gaz est un comburant (oxygène), il peut se créer une compression adiabatique (augmentation brusque de la température) qui peut conduire à l'inflammation des éléments non métalliques du détendeur (joint, siège en plastique).

Une solution connue pour consiste à prévoir une ouverture progressive du robinet via un mécanisme de deux clapets concentriques actionnés séquentiellement par le levier cf. EP3062005A1. Cette solution est mal adaptée aux opérations de purge. En outre une ouverture intempestive du robinet peut être favorisée si le robinet présente une ergonomie permettant cette brève ouverture.

Le document US2016153617 décrit un robinet selon le préambule de la revendication 1.

Ces solutions ne permettent de résoudre que de façon imparfaite ces problèmes.

Un but de la présente invention est de pallier tout ou partie des inconvénients de l'art antérieur relevés ci-dessus.

A cette fin, le robinet selon l'invention, comprend un organe de rappel du mécanisme de commande vers sa position de repos et une butée mécanique assurant un maintien stable du mécanisme de commande dans sa position active, c'est-à-dire que, lorsque le mécanisme de commande est dans sa position d'ouverture intermédiaire du circuit et n'est pas maintenu manuellement, l'organe de rappel déplace l'ensemble de clapet(s) dans sa position de repos de fermeture du circuit et, lorsque l'ensemble de clapet(s) est dans sa position active et n'est pas maintenu manuellement, la butée mécanique maintient cette position active contre l'effort de l'organe de rappel, le mécanisme de commande comprenant deux organes manuels de commande distincts actionnant l'ensemble de clapet(s) pour assurer l'ouverture du circuit selon la première section d'ouverture et selon la seconde section d'ouverture.

Cette structure permet à l'utilisateur de réaliser facilement, en toute sécurité et de façon aisée des opérations de purges.

Le robinet offre la possibilité de souffler les particules présentes au niveau du raccord de sortie, sans risque pour l'utilisateur car le débit est limité lors de l'activation de l'organe de commande correspondant. Le risque de basculement ou de projection de la bouteille et le bruit sont aussi réduits.

Les cycles de rinçage (compression/détente) sur l'équipement aval peuvent être réalisés à faible pression. L'ergonomie d'usage est adaptée à l'opération via un débit maîtrisé et un actionnement mono sable du mécanisme de commande pour cette opération.

Par ailleurs, des modes de réalisation de l'invention peuvent comporter l'une ou plusieurs des caractéristiques suivantes :
- le rapport entre la seconde section d'ouverture et la première section d'ouverture est compris entre 1/50 et 1/2 ou entre 1/100 et 1/20 et de préférence entre 1/10 et 1/5 ou entre 1/80 et 1/30,
- le mécanisme de commande comprend au moins l'un parmi : un levier articulé sur le corps, un bouton poussoir à déplacement en translation, un actionneur rotatif tel qu'un volant ou une molette,
- un premier organe manuel de commande est configuré pour actionner l'ensemble de clapet(s) uniquement dans la position d'ouverture intermédiaire du circuit selon la seconde section d'ouverture, le second organe manuel de commande étant configuré pour actionner l'ensemble de clapet(s) uniquement dans la position d'ouverture du circuit selon la première section d'ouverture,
- le robinet comprend un mécanisme de verrouillage du second organe manuel de commande dans la position de repos empêchant un déplacement vers la position active d'ouverture du circuit selon la première section d'ouverture, le mécanisme de verrouillage étant commandé par le premier organe manuel de commande,
- dans sa position de repos non actionnée le premier organe manuel de commande assure un verrouillage du second organe manuel de commande dans la position de repos bloquant le déplacement du second organe manuel de commande dans la position active d'ouverture du circuit selon la première section d'ouverture, en position actionnée de l'organe manuel de commande (ouverture intermédiaire du circuit selon une seconde section d'ouverture), l'organe manuel de commande déverrouillant le second organe manuel de commande permettant son déplacement de la position vers la position active et l'ouverture du circuit selon la première section d'ouverture,
- le déplacement du second l'organe manuel de commande de sa position de repos vers sa position active décrit un mouvement de nature différente ou de sens distinct, notamment un sens opposé, au mouvement du second organe manuel de commande se déplaçant de sa position de repos vers sa position actionnée,
- le robinet comporte un mécanisme de couplage du déplacement du second organe manuel de commande et du premier organe manuel de commande lorsque le second organe de commande est déplacé de sa position active vers sa position de repos, le mécanisme de couplage sollicitant automatiquement le premier organe manuel de commande vers sa position non actionnée,
- l'ensemble de clapet(s) comporte deux clapets d'obturation distincts mobiles par rapport à des sièges respectifs et définissant en position d'ouverture respectivement les deux sections d'ouverture distinctes,
- les deux clapets sont commandés respectivement par le premier organe manuel de commande et le second organe manuel de commande,
- les deux clapets d'obturation distincts sont disposés en série dans une même conduite du circuit,
- les deux clapets d'obturation sont commandés par au moins un même axe-poussoir mobile commandé par le premier organe manuel de commande et le second organe manuel de commande,
- l'actionnement du premier organe manuel de commande déplace le poussoir selon une première course actionnant l'ouverture d'un premier des deux clapet(s) dans une position d'ouverture avec la seconde section d'ouverture du circuit, le déplacement ultérieur du second organe manuel de commande de sa position de repos vers sa position active déplaçant le poussoir selon une seconde course actionnant l'ouverture du second clapet dans une position d'ouverture du circuit avec la première section d'ouverture,
- le mécanisme de verrouillage du second organe manuel de commande comprend une butée mécanique mobile,
- le mécanisme de verrouillage agit sur une came solidaire du second organe manuel de commande,
- l'actionnement du ou des clapets est réalisé via un dispositif de transmission d'effort entre le mécanisme de commande et l'ensemble de clapet(s),
- au moins une partie de ce dispositif de transmission d'effort fait partie du mécanisme de verrouillage,
- le mécanisme de verrouillage comprend une butée mécanique entre un profil de la came et un organe mobile du mécanisme de transmission de mouvement entre la came et l'ensemble de clapet(s),
- les deux organes manuels de commande sont des leviers articulés sur le corps et comprenant chacun une came respective ayant un profil de came respectif et coopérant avec au moins un poussoir mobile de commande de l'ensemble de clapet(s) d'obturation,
- le mécanisme de couplage du déplacement est intégré aux cames des leviers,
- le mécanisme de couplage du déplacement comprend un axe solidaire d'au moins une came et au moins une gorge formée dans l'autre came et accueillant et guidant l'axe,
- la configuration de l'ensemble de clapets dans la position d'ouverture du circuit selon la seconde section d'ouverture est réalisée lorsque le second organe manuel de commande est dans sa position de repos et que le premier organe manuel de commande est actionné,
- les deux organes manuels de commande sont adjacents ou concentriques ou situés de façon distante, notamment sur des faces distinctes ou opposées du corps,
- le ou les clapets d'obturation comprennent au moins l'un parmi : un clapet mobile en translation relativement à un siège respectif et sollicité par un organe de rappel vers le siège, un clapet intégrant un orifice calibré permettant le passage d'un débit prédéterminé en position fermée correspondant à la première section d'ouverture du circuit et permettant un second débit de gaz en position ouverte correspondant à la première section d'ouverture du circuit, une bille sollicitée par un organe de rappel sur un siège,
- le mécanisme de verrouillage peut être du type mécanique et/ou magnétique et/ou pneumatique et/ou électromécanique et/ou hydraulique,
- le mécanisme de verrouillage est situé au moins en partie au niveau d'une des cames des leviers,
- le mécanisme de verrouillage comprend un axe solidaire d'au moins une came au moins une gorge formée dans l'autre came et accueillant l'axe,
- L'invention concerne également un réservoir ou ensemble de réservoirs de fluide sous pression, notamment de gaz sous pression comprenant un robinet conforme à l'une quelconque des caractéristiques ci-dessus ou ci-après.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- les figures 1 et 2 représentent des vues en coupe, schématiques et partielles, illustrant la structure et le fonctionnement d'un premier exemple de réalisation ne formant pas partie de l'invention selon respectivement deux configurations d'utilisation,
- la figure 3 représente une vue en coupe, schématique et partielle, illustrant la structure et le fonctionnement d'un second exemple de réalisation possible de l'invention,
- la figure 4 représente une vue en coupe, schématique et partielle, illustrant la structure et le fonctionnement d'un troisième exemple de réalisation possible de l'invention,
- la figure 5 représente une vue en coupe, schématique et partielle, illustrant la structure et le fonctionnement d'un quatrième exemple de réalisation possible de l'invention,
- la figure 6 représente une vue en coupe, schématique et partielle, illustrant la structure et le fonctionnement d'un cinquième exemple de réalisation possible de l'invention,
- la figure 7 représente une vue de côté, schématique et partielle, illustrant un détail de la structure d'un robinet dans un sixième exemple de réalisation possible de l'invention et dans une première configuration d'utilisation,
- la figure 8 représente un détail de la figure 7,
- la figure 9 représente une vue analogue à celle de la figure 7 illustrant un détail de la structure de la figure 7 dans une seconde configuration d'utilisation,
- la figure 10 représente une vue analogue à celle de la figure 7 dans une troisième configuration d'utilisation.
- la figure 11 représente une vue schématique et partielle illustrant un exemple de principe de fonctionnement de l'invention.

Le robinet 1 illustré aux figures comprend classiquement un corps 2 abritant un circuit 3 de fluide ayant une extrémité amont 4 destinée à être mise en relation avec une réserve de fluide sous pression et extrémité aval 5 destinée à être mise en relation avec un utilisateur de fluide.

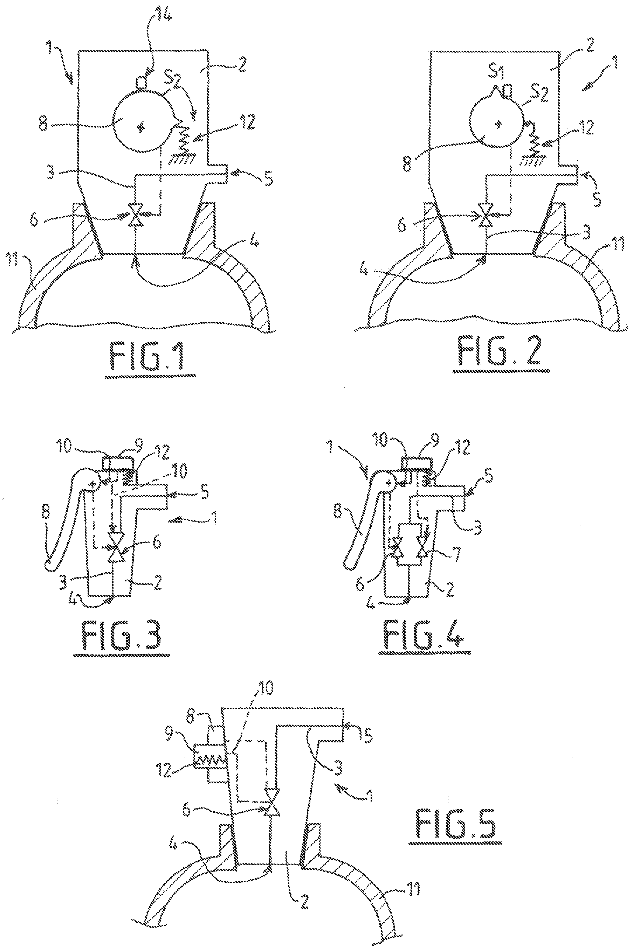

L'extrémité amont 4 peut être raccordée à une bouteille 11 de gaz sous pression (cf. figure 5) ou à une circuiterie reliée à une bouteille de gaz sous pression ou plusieurs bouteilles (cadre de bouteilles par exemple). A cet effet, l'extrémité correspondante du corps 2 du robinet 1 peut être filetée.

L'extrémité aval 5 débouche par exemple au niveau d'un raccord de sortie par exemple.

Le circuit 3 comprend un ensemble de clapet(s) comprenant au moins un clapet 6 d'obturation permettant de fermer ou d'ouvrir le circuit 3 (clapet d'isolation).

Le robinet 1 comprend un mécanisme 8 de commande manuelle de l'ensemble de clapet(s) 6. Dans cet exemple, ne formant pas partie de l'invention telle que revendiquée, l'organe 8 de commande est un unique volant monté rotatif sur le robinet 1.

Le volant 8 est mobile sur le corps 2 entre une position de repos dans laquelle le clapet 6 est dans une position de fermeture du circuit 3 (cf. figure 1) et une position active dans laquelle le clapet 6 est dans une position d'ouverture du circuit 3 selon une première section d'ouverture S1, par exemple une ouverture totale (cf. figure 2.).

Le volant 8 passe par une position d'ouverture intermédiaire dans laquelle il actionne le clapet 6 dans une position d'ouverture intermédiaire du circuit 3 selon une seconde section d'ouverture S2 inférieure à la première section S1 d'ouverture.

Le robinet 1 comprend un organe 12 de rappel (ressort par exemple) du volant 8 vers sa position de repos et une butée mécanique 14 assurant un maintien stable du volant 8 dans sa position active.

C'est-à-dire que, lorsque le clapet 6 est dans sa position d'ouverture intermédiaire et n'est pas maintenu manuellement, l'organe 12 de rappel déplace le clapet 6 dans sa position de repos de fermeture du circuit 3. En revanche, lorsque l'ensemble le volant 8 est dans sa position active et n'est pas maintenu manuellement, la butée mécanique 14 maintient cette position contre l'effort de l'organe 12 de rappel (cf. figure 2). Par exemple, un mécanisme de point-dure, (butée 14) assure cette position stable.

C'est-à-dire que la libération d'un débit réduit (pour une purge ou autre) est réalisée manuellement tant que l'utilisateur maintient l'effort d'actionnement. En revanche, pour le soutirage au débit plus important (ouverture complète), la position plus avancée est stable (l'utilisateur peut interrompre son effort).

Ceci confère une grande ergonomie et sécurité pour l'utilisateur.

Le rapport (S2/S1) entre la seconde section d'ouverture (S2) et la première section d'ouverture (S1) peut être compris entre 1/50 et 1/2 et de préférence entre 1/10 et 1/5

Bien entendu, l'organe 8 rotatif il pourrait être remplacé par un levier articulé sur le corps 2.

La position d'ouverture intermédiaire est une position prédéterminée, par exemple décalée d'un angle déterminé (15 à 45° notamment 20 à 40° en rotation) et/ou décalée d'une distance déterminée par rapport à la position de repos (2,5 à 5cm par exemple).

L'ouverture intermédiaire ouvre le circuit 3 entre l'extrémité amont 4 et l'extrémité aval 5 avec un degré d'ouverture déterminé (section d'ouverture S2 par exemple) qui est de préférence inférieure au degré d'ouverture établi lors d'une ouverture complète (première section S1).

Dans l'exemple des figures 1 et 2 , ne formant pas partie de l'invention telle que revendiquée, le mécanisme de commande est constitué d'un volant 8 ou sélecteur rotatif dont la première partie de rotation assure l'ouverture intermédiaire et la poursuite de la rotation assure l'ouverture complète. Ces deux degrés d'ouverture pourraient être réalisés par des mouvements distincts (par exemple une rotation suivie d'une translation du même organe 8 ou le contraire).

Dans les exemples des figures 3 à 5, le mécanisme 8 de commande comprend deux organes 8, 9 manuels de commande distincts actionnant l'ensemble de clapet(s) 6, 7 pour assurer l'ouverture intermédiaire et la première position d'ouverture (figures 3 et 4 : un levier 8 et un bouton 9 mobile en translation ou en rotation, figure 4 : deux boutons 8, 9 mobile en translation et/ou en rotation).

Les deux organes 8, 9 manuels de commande peuvent être adjacents ou concentriques ou situés de façon distante, notamment sur des faces distinctes ou opposées du corps 2.

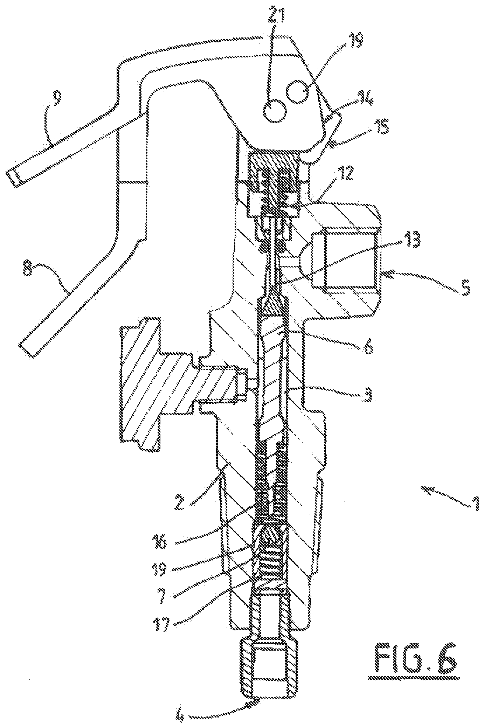

Les deux degrés d'ouverture S1, S2 du circuit 3 peuvent être réalisés via un unique clapet 6 ayant deux positions d'ouverture respectives. De préférence cependant, les deux degrés d'ouverture S1 S2 sont réalisés via deux clapets 6, 7 distincts (cf. figures 4 ou 6).

Les deux clapets 6, 7 distincts sont de préférence mobiles par rapport à des sièges respectifs et définissant, en position d'ouverture, respectivement les deux sections d'ouverture distinctes S1, S2. Par exemple, les deux clapets 6, 7 sont commandés respectivement par le premier 9 organe manuel de commande et le second organe 8 manuel de commande.

Comme illustré, les deux clapets 6, 7 d'obturation peuvent être disposés en parallèle (cf. figure 4) ou en série dans une même conduite du circuit 3 (cf. figure 6).

L'actionnement de l'ensemble de clapets 6, 7 peut être est réalisé via un dispositif de transmission d'effort entre le mécanisme 8, 9 de commande et l'ensemble de clapet(s) 6, 7.

Par exemple, les deux clapets 6, 7 d'obturation peuvent être commandés par au moins un même axe-poussoir et notamment par exemple via deux axes poussoirs en série 13, 18 mobiles commandés par le premier 9 organe manuel de commande et le second organe 8 manuel de commande.

Par exemple, l'actionnement du premier organe 9 manuel de commande (par exemple un premier levier 9 poussé vers le corps 2 ou, respectivement, tiré de façon à s'écarter du corps 2) déplace les axes poussoir 13, 18 selon une première course actionnant l'ouverture d'un premier 6 des deux clapets dans une position d'ouverture avec la seconde section d'ouverture S2 du circuit 3. Le déplacement ultérieur du second organe 8 manuel de commande (un second levier 8 relevé/écarté du corps 2 par exemple) déplace les axes poussoirs 13, 18 selon une seconde course actionnant l'ouverture du second 7 clapet dans une position d'ouverture du circuit 3 avec la première section d'ouverture S1.

De préférence, le déplacement du second l'organe 8 manuel de commande de sa position de repos vers sa position active décrit un mouvement de nature différente ou de sens distinct, notamment un sens opposé, au mouvement du premier organe 9 manuel de commande se déplaçant de sa position de repos vers sa position actionnée. Bien entendu le sens d'actionnement ou de déplacement de l'actionneur 9 (premier organe 9 de commande) de sa position verrouillage vers sa position de déverrouillage peut être identique ou similaire au sens d'actionnement ou de déplacement du levier 8 de commande sa position de repos vers sa position active. Par exemple, pour relever le levier 8 (pour l'écarter du corps) il faut au préalable relever l'actionneur 9 (l'écarter du corps) également d'une distance déterminée, par exemple quelques centimètres. Ces deux mouvements (levier 8 et actionneur 9) peuvent être parallèles. Les axes de rotation du levier 8 et de l'actionneur 9 peuvent notamment être parallèles.

De même, le retour de l'actionneur 9 dans sa position de verrouillage et le retour du levier 8 dans sa position fermée peuvent décrire des déplacements identiques ou sens identiques (par exemple vers le corps dans cet exemple).

Bien entendu, le levier 8 et l'actionneur 9 peuvent avoir en variante des mouvements distincts (non parallèles et/ou de nature différente rotation/translation...).

Ainsi les mouvements du levier 8 et de l'actionneur 9 peuvent être des rotations de même sens ou de sens opposés.

Par exemple, lorsque l'actionneur 9 doit être tiré pour passer de sa position de verrouillage à sa position de déverrouillage, dans sa première position de verrouillage, l'actionneur 9 peut posséder une extrémité de préhension disposée le long ou en vis-à-vis de la face avant du corps 2 du robinet 1, (par exemple à une distance comprise entre zéro et 4 à 5 cm notamment entre 1 et 3 cm). En position de déverrouillage cette extrémité peut être écartée de 1 à 6 cm (ou plus de la face avant du corps 2 du robinet 1), par exemple écartée 3 à 5 cm de la face avant du corps du robinet 1. Inversement, dans le cas d'un actionneur 9 qui doit être poussé (vers le corps 2 du robinet), la position de verrouillage peut être écartée de 1 à 6 cm du corps du robinet et la position de déverrouillage peut être écartée du corps 2 de zéro à 3 cm.

Dans sa position de verrouillage et/ou dans sa position de déverrouillage l'actionneur 9 (ou une portion de préhension au moins de ce dernier) peut avoir le même écartement par rapport au corps 2 du robinet que l'organe 8 de commande (ou une portion de préhension de ce dernier) qui est dans sa position de repos.

En position fermée, le premier clapet 6 peut fermer de façon étanche le circuit 3. En position fermée, le second clapet 7 peut fermer de façon non étanche le circuit 3. C'est-dire que le second clapet 7 comprend un orifice calibré définissant la seconde section S2 d'ouverture du circuit 3.

Le second clapet comprend par exemple une bille 7 poussée vers un siège par un ressort 17. Par exemple, la bille 7 est en appui non étanche sur un siège (une douille par exemple) avec un espacement prédéterminé (section d'ouverture S2).

Le passage (seconde section d'ouverture S2) entre la bille 7 et le siège (douille) peut être obtenu en altérant la ligne d'étanchéité entre la bille et son siège par un brochage, un trait de scie ou autre outil. La bille 7 peut ne pas être parfaitement cylindrique (boule à facettes, bille poreuse, ou de tout autre forme pour permettre au gaz de passer avec un débit limité).

Une autre solution alternative est de placer un orifice calibré en parallèle de ce second clapet 7, pour assurer le passage limité du gaz. Alternativement cet orifice calibré peut passer au travers du corps du clapet 7.

Dans le cas de deux leviers 8, 9 reliés à des cames 14, 15 respectives (cf. figures 6 à 10), lors de l'actionnement (par exemple une poussée vers le corps ou respectivement une traction, l'éloignant du corps) du premier levier 9, la came 15 de ce levier 9 déplace le premier clapet 6 via un mécanisme de transmission de mouvement. Le mécanisme de transmission de mouvement peut comprendre notamment un ou plusieurs axes-poussoirs 13, 18 en série (ou en parallèle), un organe élastique 12 (ressort notamment pour rattraper les jeux et/ou maintenir un contact dans la chaine de transmission de mouvement entre la came et le clapet 6). Tout autre mécanisme de transmission de mouvement peut être envisagé. On pourra par exemple se référer au document FR2828922A1.

L'actionnement du premier levier 9 déplace le mécanisme de transmission de mouvement d'une première course qui déplace à son tour le premier clapet 6 qui ouvre le circuit 3 au niveau du premier clapet 6. Le gaz qui est admis à passer via l'orifice calibré du second clapet 7 peut ainsi s'échapper vers la seconde extrémité 5 du circuit 3. Le gaz provenant de la première extrémité 4 du circuit 3 passe en effet entre la bille 7 et la douille 19 puis entre corps 2 et le clapet 6 et peut sortir du robinet 1.

Avantageusement, le robinet 1 peut comprendre un mécanisme 9, 10 de verrouillage du second organe 8 manuel de commande dans la position de repos empêchant un déplacement vers la position active d'ouverture du circuit selon la première section d'ouverture S1. Ce mécanisme 9, 10 de verrouillage peut être commandé (déverrouillage) par le premier organe 9 manuel de commande.

Ainsi, dans sa position de repos (non actionnée) le premier organe 9 manuel de commande peut garantir un verrouillage du second organe 8 manuel de commande dans la position de repos bloquant le déplacement du second organe 8. En revanche, en position actionnée du premier organe 9 manuel de commande (ouverture intermédiaire du circuit 3 selon une seconde section d'ouverture S2), le premier organe 9 manuel de commande peut déverrouiller le second organe 8 manuel de commande permettant son déplacement (vers la position active et l'ouverture du circuit 3 selon la première section d'ouverture S1).

C'est-à-dire que le premier organe 9 manuel de commande doit être actionné au préalable par l'utilisateur s'il veut déplacer l'autre organe 8 manuel de commande pour ouvrit totalement le circuit 3.

Cette configuration procure une double sécurité: 1) nécessité d'un déverrouillage limitant les ouvertures intempestives 2) le déverrouillage ouvre partiellement le circuit 3 ce qui réalise l'amorce d'une ouverture progressive et avertit l'utilisateur de la présence de gaz au niveau du raccord de sortie.

Ceci permet de réduire le pic de pression en aval en ralentissant la vitesse de mise en pression de la chambre aval du circuit gaz connecté à la sortie 5 du robinet 1.

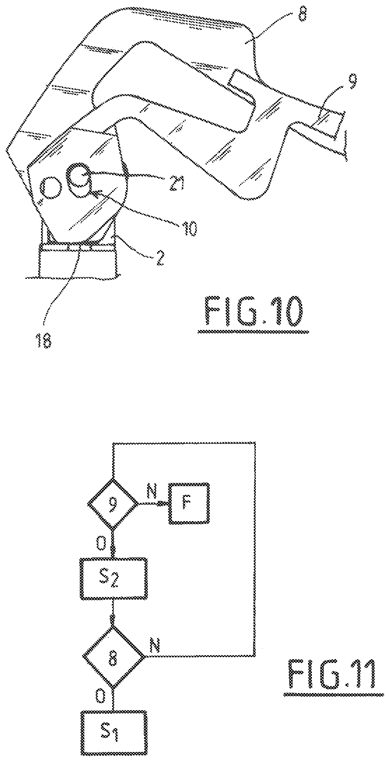

La figure 11 illustre schématiquement le fonctionnement du robinet 1. Si le premier organe 9 de commande n'est pas activé (N) le circuit est fermé (F). S'il est actionné (O) le circuit 3 est ouvert selon la seconde section d'ouverture S2 qui permet ensuite l'actionnement du levier 8. En cas de relâchement (N) le circuit se referme automatiquement (F). En revanche l'actionnement simultané et ultérieur de l'organe 8 commande (O) permet d'ouvrir totalement le circuit (S1). Sinon (N) le robinet 1 revient dans sa position fermée ou ouverte selon la position de l'organe 9 d'actionnement.

Le système de verrouillage du second levier 8 peut être localisé au niveau de la came 14 de ce dernier.

Par exemple, le profil de la came 14 du second levier 8 de commande peut comporter une forme 20 qui vient buter sur une forme complémentaire du mécanisme de transmission de mouvement (et notamment l'extrémité d'un poussoir 18).

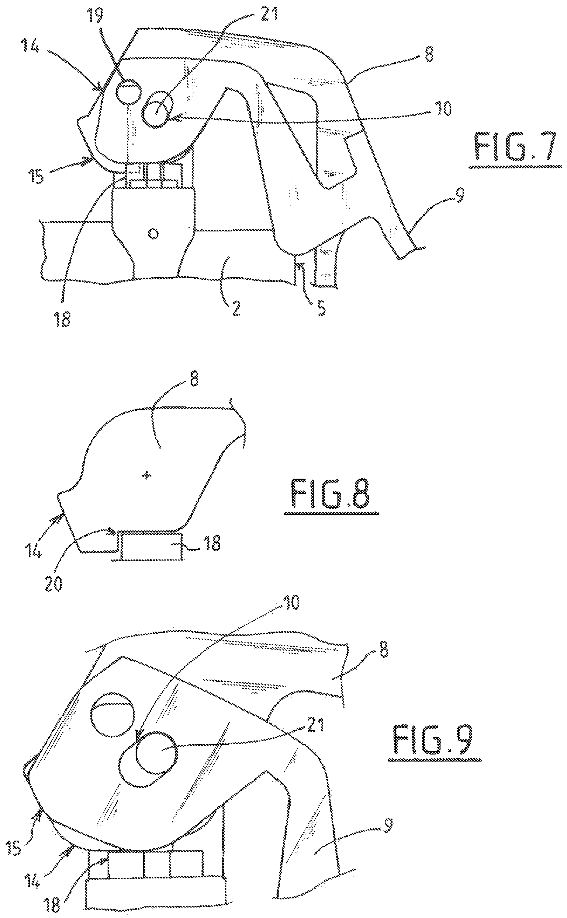

En position haute (premier levier 9 en position de verrouillage cf. figures 6 ou 7 pour le cas d'une poussée pour passer en position de déverrouillage), le mécanisme de transmission de mouvement (et notamment l'extrémité d'un poussoir 18) forme une butée mécanique empêchant la rotation du second levier 8.

En position basse (premier levier 9 en position de déverrouillage, cf. figure 9), le mécanisme de transmission de mouvement (et notamment l'extrémité d'un poussoir 18) est escamoté et ne forme plus une butée mécanique empêchant la rotation du second levier 8.

A l'issue de cette première course, le second levier 8 est ainsi déverrouillé et un débit réduit de gaz est libéré.

Cette première course permet ainsi de positionner le poussoir 18 au-delà d'un angle de butée 20 au niveau du profil de came 14.

Le second levier 8 de commande peut ensuite être pivoté à son tour pour déplacer le mécanisme 18, 13 un peu plus loin (seconde course). Cette seconde course permet de séparer le second clapet 7 (bille) de son siège (via l'extrémité du premier clapet 6).

Dans cette configuration, le circuit 3 est ouvert de façon plus importante (totalement, première section d'ouverture S1). Ceci permet au gaz un grand débit et une montée en pression plus rapide en aval des clapets.

De préférence, la fermeture du circuit 3 (à partir d'une position grande ouverte S1) est réalisé d'un seul geste.

Par exemple, le second levier 8 (ou autre) et le premier levier 9 (ou autre) sont déplacés ensemble en position initiale (circuit fermé) via un mécanisme de couplage de leurs déplacements.

Par exemple, ce mécanisme de couplage sollicite automatiquement le premier organe 9 manuel d'actionnement vers sa position initiale lorsque le second organe 8 manuel de commande est déplacé de sa position active vers sa position de repos.

De préférence, la manipulation des deux organes 8, 9 de commande est possible d'une seule main (dans le sens de l'ouverture totale et/ou dans le sens de la fermeture du circuit).

Comme illustré dans l'exemple de la figure 10, lorsque le second levier 8 est relevé (position active) le premier levier 9 peut (ou éventuellement doit) lui aussi être relevé (par exemple via le mécanisme de couplage). Bien entendu en variante le premier levier 9 d'actionnement pourrait rester en position basse (près du corps 2) ou, respectivement en position haute relevée, lorsque l'autre levier 8 est relevé en position active.

Ainsi, les deux clapets 6, 7 peuvent être sont commandés par un même mécanisme de transmission de mouvement et notamment au moins un même poussoir 18, 13 mobile.

Ce mécanisme de transmission de mouvement peut se translater de deux courses différentes, l'une courte permettant un débit limité (seconde section S2 d'ouverture), l'autre longue permettant le plein débit (première section d'ouverture S1).

Bien entendu l'invention n'est pas limitée à l'exemple des figures décrites ci-dessus. Les mécanismes à levier(s) 8, 9 peuvent être remplacé par des volants rotatifs ou autres. Par exemple la ou les cames 14, 15 pourraient être actionnées par des volants rotatifs.

Les deux courses du mécanisme de transmission de mouvement peuvent être pilotées par des cames avec des axes de rotations des leviers 8, 9 identiques (confondus) ou distincts.

De préférence, la (re)fermeture complète des deux clapets 6, 7 peut être réalisée en un seul geste qui permet de neutraliser les deux clapets 6, 7 dans la même action manuelle.

Par exemple, un mécanisme de couplage du déplacement du second organe 8 manuel de commande et du premier organe 9 manuel de commande peut être intégré aux cames 14, 15 des leviers.

Par exemple, un axe 21 solidaire d'au moins une came 8 peut être reçu dans au moins une gorge 10 formée dans l'autre came 15 et accueillant et guidant l'axe 21.

Ainsi le déplacement du second levier 8 vers sa position repos provoque également le retour de l'autre levier 9 d'actionnement vers sa position de verrouillage.

Inversement, lorsque le premier levier 9 a été positionné dans sa seconde position de déverrouillage, le déplacement de l'autre levier 8 vers sa position active (par exemple relevée) peut entraîner également le déplacement du levier 9 (relèvement par exemple).

Bien entendu, l'invention n'est pas limitée aux exemples ci-dessus. Par exemple, le mécanisme de verrouillage pourrait être intégré au niveau des cames 14, 15 via un système d'axes 21 et gorges du même type que celui du mécanisme de couplage. De même, ce mécanisme de verrouillage de l'organe 8 de commande pourrait être localisé ailleurs sur le robinet 1. De plus, ce mécanisme de verrouillage pourrait être du type magnétique et/ou pneumatique et/ou électromécanique et/ou hydraulique.

On conçoit donc que, tout en étant de structure simple et peu coûteuse, l'invention présente de nombreux avantages.

Le robinet 1 permet aux utilisateurs d'ouvrir progressivement une bouteille de gaz ou un ensemble de bouteilles de gaz (cadre) à haute pression (par exemple entre 150 et 300bar ou plus) en réduisant la vitesse de mise sous pression de tout équipement placé en aval de la vanne.

Le robinet 1 assure également une sécurité contre une ouverture intempestive. En effet en cas d'ouverture intempestive (premier organe 9 manuel de commande actionné), un débit limité est relâché en sortie et le relâchement de l'effort sur ce premier organe 9 referme automatiquement le circuit 3.

## Revendications

1. Robinet pour fluide sous pression comprenant un corps (2) abritant un circuit (3) de fluide ayant une extrémité amont (4) destinée à être mise en relation avec une réserve (11) de fluide sous pression et extrémité aval (5) destinée à être mise en relation avec un utilisateur de fluide, le circuit (3) comprenant un ensemble de clapet(s) (6, 7) comprenant au moins un clapet d'obturation permettant de fermer ou d'ouvrir le circuit (3), le robinet (1) comprenant un mécanisme (8, 9) de commande manuelle de l'ensemble de clapet(s) (6, 7), le mécanisme (8, 9) de commande étant monté mobile sur le corps (2) entre une position de repos dans laquelle l'ensemble de clapet(s) (6, 7) est dans une position de fermeture du circuit (3) et une position active dans laquelle le mécanisme (8, 9) de commande actionne l'ensemble de clapet(s) (6, 7) dans une position d'ouverture du circuit (3) selon une première section d'ouverture (S1), le mécanisme (8, 9) de commande comportant une position d'ouverture intermédiaire dans laquelle il actionne l'ensemble de clapet(s) (6, 7) dans une position d'ouverture intermédiaire du circuit (3) selon une seconde section d'ouverture (S2) inférieure à la première section (S1) d'ouverture, le robinet (1) comprenant un organe (12) de rappel du mécanisme (8, 9) de commande vers sa position de repos et une butée mécanique (14) assurant un maintien stable du mécanisme (8, 9) de commande dans sa position active, c'est-à-dire que, lorsque le mécanisme (8, 9) de commande est dans sa position d'ouverture intermédiaire du circuit (3) et n'est pas maintenu manuellement, l'organe (12) de rappel déplace le mécanisme (8, 9) de commande dans sa position de repos de fermeture du circuit (3) et, lorsque le mécanisme (8, 9) de commande est dans sa position active et n'est pas maintenu manuellement, la butée mécanique (14) maintient cette position active contre l'effort de l'organe (12) de rappel, **caractérisé en ce que** le mécanisme de commande comprend deux organes (8, 9) manuels de commande distincts actionnant l'ensemble de clapet(s) (6, 7) pour assurer l'ouverture du circuit selon la première section d'ouverture (S1) et selon la seconde section d'ouverture (S2).

2. Robinet selon la revendication 1, **caractérisé en ce que** le rapport (S2/S1) entre la seconde section d'ouverture (S2) et la première section d'ouverture (S1) est compris entre 1/50 et 1/2 et de préférence entre 1/10 et 1/5.

3. Robinet selon la revendication 1 ou 2, **caractérisé en ce que** le mécanisme (8, 9) de commande comprend au moins l'un parmi : un levier articulé sur le corps (2), un bouton poussoir à déplacement en translation, un actionneur rotatif tel qu'un volant ou une molette.

4. Robinet selon l'une quelconque des revendications 1 à 3, **caractérisé en ce qu'**un premier organe (9) manuel de commande est configuré pour actionner l'ensemble de clapet(s) (6, 7) uniquement dans la position d'ouverture intermédiaire du circuit (3) selon la seconde section d'ouverture (S2), et **en ce que** le second organe (8) manuel de commande est configuré pour actionner l'ensemble de clapet(s) (6, 7) uniquement dans la position d'ouverture du circuit (3) selon la première section d'ouverture (S1).

5. Robinet selon la revendication 4, **caractérisé en ce qu'**il comprend un mécanisme (9, 10) de verrouillage du second organe (8) manuel de commande dans la position de repos empêchant un déplacement vers la position active d'ouverture du circuit (3) selon la première section d'ouverture (S1), le mécanisme (9, 10) de verrouillage étant commandé par le premier organe (9) manuel de commande.

6. Robinet selon la revendication 5, **caractérisé en ce que**, dans sa position de repos non actionnée le premier organe (9) manuel de commande assure un verrouillage du second organe (8) manuel de commande dans la position de repos bloquant le déplacement du second organe (8) manuel de commande vers la position active d'ouverture du circuit (3) selon la première section d'ouverture (S1), en position actionnée de l'organe (9) manuel de commande, l'organe (9) manuel de commande déverrouillant le second organe (8) manuel de commande permettant son déplacement de la position de repos vers la position active et l'ouverture du circuit (3) selon la première section d'ouverture (S1).

7. Robinet selon la revendication 6, **caractérisé en ce que** le déplacement du second organe (8) manuel de commande de sa position de repos vers sa position active décrit un mouvement de même nature ou de même sens, que le mouvement du premier organe (9) manuel de commande se déplaçant de sa position de repos vers sa position actionnée.

8. Robinet selon la revendication 7, **caractérisé en ce que** le déplacement du second organe (8) manuel de commande de sa position de repos vers sa position active décrit un mouvement de nature différente ou de sens distinct, notamment un sens opposé, au mouvement du premier organe (9) manuel de commande se déplaçant de sa position de repos vers sa position actionnée

9. Robinet selon l'une quelconque des revendications 4 à 8, **caractérisé en ce qu'**il comporte un mécanisme (21, 10) de couplage du déplacement du second organe (8) manuel de commande et du premier organe (9) manuel de commande lorsque le second organe (8) de commande est déplacé de sa position active vers sa position de repos, le mécanisme de couplage (21, 10) sollicitant automatiquement le premier organe (9) manuel de commande vers sa position non actionnée.

10. Robinet selon l'une quelconque des revendications 1 à 9, **caractérisé en ce que** l'ensemble de clapet(s) comporte deux clapets (6, 7) d'obturation distincts mobiles par rapport à des sièges respectifs et définissant en position d'ouverture respectivement les deux sections d'ouverture distinctes (S1, S2).

11. Robinet selon la revendication 10 combinée à l'une quelconque des revendications 4 à 9 , **caractérisé en ce que**, les deux clapets (6, 7) sont commandés respectivement par le premier (9) organe manuel de commande et le second organe (8) manuel de commande.

12. Robinet selon la revendication 10 ou 11 **caractérisé en ce que** les deux clapets (6, 7) d'obturation distincts sont disposés en série dans une même conduite du circuit (3).

13. Robinet selon la revendication 12, **caractérisé en ce que** les deux clapets (6, 7) d'obturation sont commandés par au moins un même axe-poussoir (13, 18) mobile commandé par le premier (9) organe manuel de commande et le second organe (8) manuel de commande.

14. Robinet selon la revendication 13, **caractérisé en ce que** l'actionnement du premier organe (9) manuel de commande déplace le poussoir (13) selon une première course actionnant l'ouverture d'un premier des deux clapet(s) (6) dans une position d'ouverture avec la seconde section d'ouverture (S2) du circuit (3) et **en ce que** le déplacement ultérieur du second organe (8) manuel de commande de sa position de repos vers sa position active déplace le poussoir (13) selon une seconde course actionnant l'ouverture du second (7) clapet dans une position d'ouverture du circuit (3) avec la première section d'ouverture (S1).

15. Réservoir ou ensemble de réservoirs de fluide sous pression, notamment de gaz sous pression comprenant un robinet conforme à l'une quelconque des revendications 1 à 14.

## Patentansprüche

1. Ventil für ein unter Druck stehendes Fluid, beinhaltend einen Körper (2), der einen Fluidkreislauf (3) aufnimmt, der ein stromaufwärts liegendes Ende (4), das dazu bestimmt ist, mit einem Speicher (11) eines unter Druck stehenden Fluids verbunden zu werden, und ein stromabwärts liegendes Ende (5), das dazu bestimmt ist, mit einem Fluidverbraucher verbunden zu werden, aufweist, wobei der Kreislauf (3) eine Gesamtheit von einer oder mehreren Klappen (6, 7) beinhaltet, die mindestens eine Absperrklappe beinhaltet, die es gestattet, den Kreislauf (3) zu schließen oder zu öffnen, wobei das Ventil (1) einen Mechanismus (8, 9) zur manuellen Steuerung der Gesamtheit von einer oder mehreren Klappen (6, 7) beinhaltet, wobei der Steuermechanismus (8, 9) zwischen einer Ruhestellung, in der sich die Gesamtheit von einer oder mehreren Klappen (6, 7) in einer Schließstellung des Kreislaufs (3) befindet, und einer aktiven Stellung, in der der Steuermechanismus (8, 9) die Gesamtheit von einer oder mehreren Klappen (6, 7) in eine Öffnungsstellung des Kreislaufs (3) gemäß einem ersten Öffnungsquerschnitt (S1) bringt, beweglich an dem Körper (2) montiert ist, wobei der Steuermechanismus (8, 9) eine Zwischenöffnungsstellung umfasst, in der er die Gesamtheit von einer oder mehreren Klappen (6, 7) in eine Zwischenöffnungsstellung des Kreislaufs (3) gemäß einem zweiten Öffnungsquerschnitt (S2), der kleiner als der erste Öffnungsquerschnitt (S1) ist, bringt, wobei das Ventil (1) ein Organ (12) zur Rückstellung des Steuermechanismus (8, 9) in seine Ruhestellung und einen mechanischen Anschlag (14), der ein stabiles Halten des Steuermechanismus (8, 9) in seiner aktiven Stellung sicherstellt, beinhaltet, das heißt, dass, wenn sich der Steuermechanismus (8, 9) in seiner Zwischenöffnungsstellung des Kreislaufs (3) befindet und nicht manuell gehalten wird, das Rückstellungsorgan (12) den Steuermechanismus (8, 9) in seine Ruhestellung zum Schließen des Kreislaufs (3) bewegt, und, wenn der Steuermechanismus (8, 9) in seiner aktiven Stellung ist und nicht manuell gehalten wird, der mechanische Anschlag (14) diese aktive Stellung entgegen der Kraft des Rückstellungsorgans (12) hält, **dadurch gekennzeichnet, dass** der Steuermechanismus zwei separate manuelle Steuerorgane (8, 9) beinhaltet, die die Gesamtheit von einer oder mehreren Klappen (6, 7) betätigen, um das Öffnen des Kreislaufs gemäß dem ersten Öffnungsquerschnitt (S1) und gemäß dem zweiten Öffnungsquerschnitt (S2) sicherzustellen.

2. Ventil nach Anspruch 1, **dadurch gekennzeichnet, dass** das Verhältnis (S2/S1) zwischen dem zweiten Öffnungsquerschnitt (S2) und dem ersten Öffnungsquerschnitt (S1) zwischen 1/50 und 1/2 liegt und vorzugsweise zwischen 1/10 und 1/5 liegt.

3. Ventil nach Anspruch 1 oder 2, **dadurch gekennzeichnet, dass** der Steuermechanismus (8, 9) mindestens eines von Folgendem beinhaltet: einen Hebel, der gelenkig an dem Körper (2) angebracht ist, einen translatorisch bewegbaren Druckknopf, einen Drehsteller wie etwa ein Handrad oder ein Rändelrad.

4. Ventil nach einem der Ansprüche 1 bis 3, **dadurch gekennzeichnet, dass** ein erstes manuelles Steuerorgan (9) dazu konfiguriert ist, die Gesamtheit von einer oder mehreren Klappen (6, 7) ausschließlich in die Zwischenöffnungsstellung des Kreislaufs (3) gemäß dem zweiten Öffnungsquerschnitt (S2) zu bringen, und dass das zweite manuelle Steuerorgan (8) dazu konfiguriert ist, die Gesamtheit von einer oder mehreren Klappen (6, 7) ausschließlich in die Öffnungsstellung des Kreislaufs (3) gemäß dem ersten Öffnungsquerschnitt (S1) zu bringen.

5. Ventil nach Anspruch 4, **dadurch gekennzeichnet, dass** es einen Mechanismus (9, 10) zur Verriegelung des zweiten manuellen Steuerorgans (8) in der Ruhestellung beinhaltet, der eine Bewegung in die aktive Öffnungsstellung des Kreislaufs (3) gemäß dem ersten Öffnungsquerschnitt (S1) verhindert, wobei der Verriegelungsmechanismus (9, 10) durch das erste manuelle Steuerorgan (9) gesteuert wird.

6. Ventil nach Anspruch 5, **dadurch gekennzeichnet, dass** das erste manuelle Steuerorgan (9) in seiner nicht betätigten Ruhestellung eine Verriegelung des zweiten manuellen Steuerorgans (8) in der Ruhestellung sicherstellt und so die Bewegung des zweiten manuellen Steuerorgans (8) in die aktive Öffnungsstellung des Kreislaufs (3) gemäß dem ersten Öffnungsquerschnitt (S1) blockiert, wobei das manuelle Steuerorgan (9) in der betätigten Stellung des manuellen Steuerorgans (9) das zweite manuelle Steuerorgan (8) entriegelt und so seine Bewegung von der ruhe Stellung die aktive Stellung und das Öffnen des Kreislaufs (3) gemäß dem ersten Öffnungsquerschnitt (S1) gestattet.

7. Ventil nach Anspruch 6, **dadurch gekennzeichnet, dass** die Bewegung des zweiten manuellen Steuerorgans (8) von seiner Ruhestellung in seine aktive Stellung eine Verlagerung derselben Art oder in derselben Richtung wie die Verlagerung des ersten manuellen Steuerorgans (9), das sich von seiner Ruhestellung in seine betätigte Stellung bewegt, beschreibt.

8. Ventil nach Anspruch 7, **dadurch gekennzeichnet, dass** die Bewegung des zweiten manuellen Steuerorgans (8) von seiner Ruhestellung in seine aktive Stellung eine Verlagerung anderer Art oder in anderer Richtung, insbesondere in einer entgegengesetzten Richtung, als die Verlagerung des ersten manuellen Steuerorgans (9), das sich von seiner Ruhestellung in seine betätigte Stellung bewegt, beschreibt.

9. Ventil nach einem der Ansprüche 4 bis 8, **dadurch gekennzeichnet, dass** es einen Mechanismus (21, 10) zum Koppeln der Bewegung des zweiten manuellen Steuerorgans (8) und des ersten manuellen Steuerorgans (9) umfasst, wenn das zweite Steuerorgan (8) von seiner aktiven Stellung in seine Ruhestellung bewegt wird, wobei der Koppelmechanismus (21, 10) das erste manuelle Steuerorgan (9) automatisch in seine nicht betätigte Stellung drängt.

10. Ventil nach einem der Ansprüche 1 bis 9, **dadurch gekennzeichnet, dass** die Gesamtheit von einer oder mehreren Klappen zwei separate Absperrklappen (6, 7) umfasst, die mit Bezug auf jeweilige Sitze beweglich sind und in der Öffnungsstellung jeweils die zwei unterschiedlichen Öffnungsquerschnitte (S1, S2) definieren.

11. Ventil nach Anspruch 10 in Kombination mit einem der Ansprüche 4 bis 9, **dadurch gekennzeichnet, dass** die zwei Klappen (6, 7) jeweils durch das erste manuelle Steuerorgan (9) bzw. das zweite manuelle Steuerorgan (8) gesteuert werden.

12. Ventil nach Anspruch 10 oder 11, **dadurch gekennzeichnet, dass** die zwei separaten Absperrklappen (6, 7) in einer gleichen Leitung des Kreislaufs (3) in Reihe angeordnet sind.

13. Ventil nach Anspruch 12, **dadurch gekennzeichnet, dass** die zwei Absperrklappen (6, 7) durch mindestens einen gleichen beweglichen Druckbolzen (13, 18) gesteuert werden, der durch das erste manuelle Steuerorgan (9) und das zweite manuelle Steuerorgan (8) gesteuert wird.

14. Ventil nach Anspruch 13, **dadurch gekennzeichnet, dass** die Betätigung des ersten manuellen Steuerorgans (9) den Bolzen (13) gemäß einem ersten Hub bewegt, der das Öffnen einer ersten der zwei Klappen (6) in eine Öffnungsstellung mit dem zweiten Öffnungsquerschnitt (S2) des Kreislaufs (3) bewirkt, und dass die anschließende Bewegung des zweiten manuellen Steuerorgans (8) von seiner Ruhestellung in seine aktive Stellung den Bolzen (13) gemäß einem zweiten Hub bewegt, der das Öffnen der zweiten Klappe (7) in eine Öffnungsstellung des Kreislaufs (3) mit dem ersten Öffnungsquerschnitt (S1) bewirkt.

15. Reservoir oder Gesamtheit von Reservoiren eines unter Druck stehenden Fluids, insbesondere eines unter Druck stehenden Gases, beinhaltend ein Ventil nach einem der Ansprüche 1 bis 14.

## Claims

1. Valve for pressurized fluid comprising a body (2) housing a fluid circuit (3) having an upstream end (4) intended to be placed in communication with a reserve (11) of pressurized fluid and a downstream end (5) intended to be placed in communication with a user of fluid, the circuit (3) comprising a collection of valve shutter(s) (6, 7) comprising at least one shutoff valve shutter allowing the circuit (3) to be closed or opened, the valve (1) comprising a mechanism (8, 9) for manually controlling the collection of valve shutter(s) (6, 7), the control mechanism (8, 9) being mounted with the ability to move on the body (2) between a rest position in which the collection of valve shutter(s) (6, 7) is in a position in which the circuit (3) is closed and an active position in which the control mechanism (8, 9) actuates the collection of valve shutter(s) (6, 7) into a position in which the circuit (3) is open to a first bore section (S1), the control mechanism (8, 9) comprising an intermediate open position in which it actuates the collection of valve shutter(s) (6, 7) into an intermediate position in which the circuit (3) is open to a second bore section (S2) smaller than the first bore section (S1), the valve (1) comprising a return member (12) returning the control mechanism (8, 9) toward its rest position and a mechanical stop (14) providing stable retention of the control mechanism (8, 9) in its active position, which is to say that, when the control mechanism (8, 9) is in its intermediate position in which the circuit (3) is partially open and is not being held by hand, the return member (12) moves the control mechanism (8, 9) into its rest position in which the circuit (3) is closed and, when the control mechanism (8, 9) is in its active position and is not being held by hand, the mechanical stop (14) maintains this active position against the force of the return member (12), **characterized in that** the control mechanism comprises two distinct manual control members (8, 9) actuating the collection of valve shutter(s) (6, 7) to open the circuit to the first bore section (S1) and to the second bore section (S2).

2. Valve according to Claim 1, **characterized in that** the ratio (S2/S1) between the second bore section (S2) and the first bore section (S1) is comprised between 1/50 and 1/2, and preferably between 1/10 and 1/5.

3. Valve according to Claim 1 or 2, **characterized in that** the control mechanism (8, 9) comprises at least one of the following: a lever articulated to the body (2), a push-button to be moved in translation, a rotary actuator such as a handwheel or a knob.

4. Valve according to any one of Claims 1 to 3, **characterized in that** a first manual control member (9) is configured to actuate the collection of valve shutter(s) (6, 7) only into the intermediate position in which the circuit (3) is open to the second bore section (S2), and **in that** the second manual control member (8) is configured to actuate the collection of valve shutter(s) (6, 7) only into the position in which the circuit (3) is open to the first bore section (S1).

5. Valve according to Claim 4, **characterized in that** it comprises a locking mechanism (9, 10) locking the second manual control member (8) in the rest position preventing a movement toward the active position in which the circuit (3) is open to the first bore section (S1), the locking mechanism (9, 10) being controlled by the first manual control member (9).

6. Valve according to Claim 5, **characterized in that**, in its non-actuated rest position, the first manual control member (9) locks the second manual control member (8) in the rest position blocking the movement of the second manual control member (8) toward the active position in which the circuit (3) is open to the first bore section (S1), when the manual control member (9) is in the actuated position, the manual control member (9) unlocking the second manual control member (8) allowing it to move from the rest position toward the active position and allowing the circuit (3) to be opened to the first bore section (S1).

7. Valve according to Claim 6, **characterized in that** the movement of the second manual control member (8) from its rest position toward its active position describes a movement of the same nature or in the same direction, as the movement of the first manual control member (9) moving from its rest position toward its actuated position.

8. Valve according to Claim 7, **characterized in that** the movement of the second manual control member (8) from its rest position toward its active position describes a movement of a different nature or in a distinct direction, notably in an opposite direction, compared with the movement of the first manual control member (9) moving from its rest position toward its actuated position.

9. Valve according to any one of Claims 4 to 8, **characterized in that** it comprises a coupling mechanism (21, 10) that couples the movement of the second manual control member (8) and of the first manual control member (9) when the second control member (8) is moved from its active position toward its rest position, the coupling mechanism (21, 10) automatically urging the first manual control member (9) toward its non-actuated position.

10. Valve according to any one of Claims 1 to 9, **characterized in that** the collection of valve shutter(s) comprises two distinct shut-off valve shutters (6, 7) able to move with respect to respective seats and in the open position respectively defining the two distinct bore sections (S1, S2).

11. Valve according to Claim 10 combined with any one of Claims 4 to 9, **characterized in that** the two valve shutters (6, 7) are controlled respectively by the first manual control member (9) and the second manual control member (8).

12. Valve according to Claim 10 or 11, **characterized in that** the two distinct shut-off valve shutters (6, 7) are arranged in series in the one same line of the circuit (3).

13. Valve according to Claim 12, **characterized in that** the two shut-off valve shutters (6, 7) are controlled by at least one same mobile pushrod (13, 18) controlled by the first manual control member (9) and the second manual control member (8).

14. Valve according to Claim 13, **characterized in that** actuation of the first manual control member (9) moves the pushrod (13) over a first travel that actuates the opening of a first (6) of the two valve shutter(s) into an open position with the second bore section (S2) for the circuit (3), and **in that** the subsequent movement of the second manual control member (8) from its rest position toward its active position moves the pushrod (13) over a second travel actuating the opening of the second valve shutter (7) into a position in which the circuit (3) is open with the first bore section (S1).

15. Reservoir or collection of reservoirs for pressurized fluid, notably for pressurized gas, comprising a valve according to any one of Claims 1 to 14.
